(19) Europäisches Patentamt
European Patent Office
Office européen des brevets

(11) **EP 4 227 754 B1**

(12) **EUROPEAN PATENT SPECIFICATION**

(45) Date of publication and mention
of the grant of the patent:
**31.01.2024 Bulletin 2024/05**

(51) International Patent Classification (IPC):
*G05D 23/19* (2006.01)     *G01K 17/00* (2006.01)
*H02J 3/14* (2006.01)     *G05B 13/04* (2006.01)
*F24D 19/10* (2006.01)     *F24F 11/00* (2018.01)

(21) Application number: **22156770.4**

(22) Date of filing: **15.02.2022**

(52) Cooperative Patent Classification (CPC):
**G05D 23/1917; F24D 19/10; F24H 15/254;
G01K 17/00; G01K 17/06; G06N 3/084;
G06N 3/086; G06N 3/09;** G06N 3/048

(54) **ESTIMATES OF COOLING OR HEATING POWER**

SCHÄTZUNGEN VON KÜHL- ODER HEIZLEISTUNG

ESTIMATIONS DE PUISSANCE DE REFROIDISSEMENT OU DE CHAUFFAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.08.2023 Bulletin 2023/33**

(73) Proprietor: **Siemens Schweiz AG
8047 Zürich (CH)**

(72) Inventors:
• **Di Pietro, Tiziano
6597 Agarone (CH)**
• **Maurer, Bettina
3700 Spiez (CH)**
• **Schumacher, Benedikt
8623 Wetzikon (CH)**

(74) Representative: **Siemens Patent Attorneys
Postfach 22 16 34
80506 München (DE)**

(56) References cited:
**WO-A1-2020/048761     CN-B- 108 039 710
US-A1- 2021 285 671**

**Description**

Background

The present disclosure deals with estimating and/or determining an amount of power required for cooling or heating a site. More specifically, the present disclosure focuses on an amount of power required for cooling or heating a building such as a commercial and/or industrial and/or residential building.

Installations for heating and/or ventilation, and/or air-conditioning (HVAC) are commonly made up of a plurality of circuits. Each circuit comprises one or several thermal energy exchangers to provide heating and/or cooling to various parts of a building. Thermal energy exchangers can be heating devices and/or cooling devices. A thermal energy exchanger of a domestic heating system can be a heat exchanger such as a radiator.

Energy management systems and/or power management systems can control thermal loads of a site. More specifically, energy management systems and/or power management systems can control cooling and/or heating within a building. The building can, by way of non-limiting example, be a commercial and/or an industrial and/or a residential building.

Buildings can employ hot-water tanks to store thermal energy such as heat. Likewise, coldwater storage tanks can be employed as buffers for coolants such as water. Also, storage ovens can store thermal energy to be released during the day. These examples of storage devices are not exhaustive.

To minimise waste of power and to inhibit emissions of carbon dioxide, a daily amount of cooling power and/or of heating power shall be estimated in advance. Any deviation of such estimates from actual demand can result in an oversupply or in an undersupply of thermal power. If too much thermal energy is stored in a storage tank, an amount of power will be lost due to the excessive supply. If too little thermal energy is stored, a cooling and/or heating system may need to activate during the day and fill a gap between supply and demand.

Also, occupants and operators of buildings are increasingly aware of the technical aspects of their use of thermal power. Occupants and operators are also increasingly aware of emissions of carbon dioxide caused by their use of thermal power. Operators can, by way of non-limiting example, investigate defects within a system for heating and/or ventilation and/or air-conditioning, if their use of thermal power beats expectations. Occupants also seek to minimise any environmental impacts of their cooling and/or heating. Those environmental impacts include, but are not limited to, emissions of carbon dioxide.

That said, an estimate of the actual use of thermal power can depend on a plethora of factors. These factors include, but are not limited to:

- supply temperatures of thermal energy exchangers,
- return temperatures of thermal energy exchangers,
- valve positions at such thermal energy exchangers,
- setpoint temperatures for such thermal energy exchangers,
- room temperatures,
- outside temperatures,
- etc.

Certain factors such as outside temperatures may not be readily available. A lack of a sensor for outside temperature may, by way of non-limiting example, exacerbate the problem of adequately estimating outside temperatures. The problem is further aggravated because buildings differ in their amounts of thermal insulation and/or in the type of heating system installed. Buildings may also differ in the efficiencies of their thermal energy exchangers. This list of differences between buildings is by no means exhaustive.

It is thus far from certain whether one model can be applied to provide estimates of cooling power and/or of heating power that are at least fair. Even if there was such a model, it would not be trivial to limit the numbers of factors that impact on the results of such a model.

A patent application WO2015/061271A1 was filed by the University of Florida on 21 October 2014. The application was published on 30 April 2015. WO2015/061271A1 deals with low-frequency ancillary power grid services.

WO2015/061271A1 discloses a high-fidelity model. The high-fidelity model is calibrated such that it can predict temperatures within one or more zones. For calibration, data are collected from a building having a plurality of zones. To mitigate influences of solar radiation or of occupant heat gains, these data are collected at nighttime.

A patent application US2021/285671A1 was filed by Johnson Controls on 3 June 2021. The application was published on 16 September 2021. A priority date of 25 April 2017 is claimed. US2021/285671A1 deals with a predictive building control system with discomfort threshold adjustment.

A model for determining minimum and maximum temperature bounds is introduced in US2021/285671A1. According to paragraph [0107] of US2021/285671A1, an actual or predicted temperature $T_{zone}$ is kept within these minimum and maximum bounds. According to paragraph [0108], the model can be a heat transfer model. The dynamics of heating or cooling can, by way of example, be described by an energy balance:

$$C\frac{dT_{zone}}{dt} = -H(T_{zone} - T_{ambient}) + \frac{dQ_{HVAC}}{dt} + \frac{dQ_{other}}{dt}$$

The energy balance does not depend on a setpoint temperature. The energy balance of US2021/285671A1 does also not involve a valve position.

The model of temperature resembles a resistive-capacitive network. It provides a plurality of interconnected resistive-capacitive network models for the individual zones of the building. The model predicts changes of temperatures over time for individual zones as a function of its capacitive and resistive parameters. A least-squares approach is used to fit parameters of the model.

Summary

The present disclosure deals with a method and a device for estimating a cooling power and/or a heating power. The cooling power and/or the heating power is a cooling power and/or heating power dissipated via a terminal unit such as a thermal energy exchanger. To that end, various input signals are collected. A setpoint temperature is an input signal. A temperature inside a site and/or a building and/or a zone and/or a space and/or a room forms another input signal. An indication of valve position is yet another input signal. The indication of valve position can, by way of non-limiting example, originate from a thermostat or from a smart thermostat. The indication of valve position can, by way of non-limiting example, originate from a system controller. These signals are processed. Values of setpoint temperature, of inside temperature, and of valve position are produced. A calibrated model such as a neural network receives the values at its input nodes. The calibrated model and/or the neural network then processes its inputs. The calibrated model and/or the neural network estimates a heat transfer in the form of a cooling power and/or a heating power via the terminal unit.

The method and the device rely on a minimum of input parameters. The estimates produced by the calibrated model are fair with deviations from actual values being mostly less than twenty percent. In many cases, these estimates are even satisfactory. That is why the method, and the device are applicable to a plethora of sites and/or buildings.

The inputs of the calibrated model and/or of the neural network can be normalised. Normalisation of input values yields even more accurate estimates of heat transfer. More specifically, normalisation of input values yields more accurate estimates of cooling power and/or of heating power.

A site or a building can comprise a plurality of valves. In this case, it makes sense to determine a mean valve position. The mean valve position represents the valves in the building or at the site. More specifically, a weighted mean represents the valves in the building or at the site.

To further improve on the accuracy of the estimates, an outside temperature can be factored into the estimate. The outside temperature can, by way of example, be read from a sensor or be received from a weather station. A value of outside temperature is then produced from the signal indicative of outside temperature. The calibrated model receives an additional input, the additional input being the value of outside temperature. More specifically, the neural network receives an additional input, the additional input being the value of outside temperature. The calibrated model and/or the neural network additionally processes the value of outside temperature. The calibrated model and/or the neural network estimates a heat transfer in the form of a cooling power and/or a heating power via the terminal unit.

The value of outside temperature can also be normalised. Normalisation of outside temperature yields even more accurate estimates of heat transfer. More specifically, normalisation of outside temperature yields more accurate estimates of cooling power and/or of heating power.

Where the estimates are exclusively based on setpoint temperatures, inside temperatures, outside temperatures, and valve positions, the results are still generally applicable. The estimates can be applied to most sites or buildings since outside temperatures can be received from a service provider. In other words, a limited number of input values yields estimates of heat transfer that deviate from actual values mostly by less than twenty percent. Deviations can in many cases be kept below ten percent.

The outputs of the method and/or of the device can also be used to curtail power. It can become necessary to curtail power when the stability of the power grid is no longer guaranteed. A grid operator can then receive an estimate of cooling power and/or of heating power. The grid operator can then curtail power to a system for heating and/or ventilation and/or air-conditioning to maintain stability of the grid.

Brief description of the drawings

Various features will become apparent to those skilled in the art from the following detailed description of the disclosed non-limiting embodiments. The drawings that accompany the detailed description can be briefly described as follows:

FIG 1 schematically shows various terminal units and a system controller of a heating and/or ventilation and/or air-conditioning system.

FIG 2 is a schematical representation of flows of power into and out of a site.

FIG 3 illustrates a first neural network for estimating cooling and/or heating power.

FIG 4 illustrates a second neural network for estimating cooling and/or heating power.

Detailed description

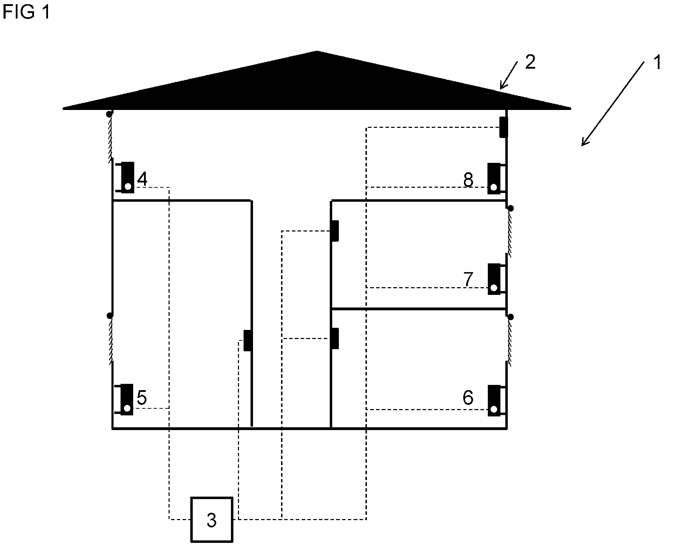

FIG 1 shows a system for heating and/or ventilation and/or air-conditioning 1. The system for heating and/or ventilation and/or air-conditioning 1 comprises a system controller 3. The system controller 3 can be arranged at a site 2 that is controlled by the system for heating and/or ventilation and/or air-conditioning 1. More specifically, the system controller 3 can be arranged inside a building 2 that is controlled by the system for heating and/or ventilation and/or air-conditioning 1.

The system controller 3 can also be located remotely from a site 2 that is controlled by the system for heating and/or ventilation and/or air-conditioning 1. More specifically, the system controller 3 can be located remotely from a building 2 that is controlled by the system for heating and/or ventilation and/or air-conditioning 1. The system controller 3 can, by way of non-limiting example, be located more than one kilometer from the site or from the building 2. The system controller 3 can, by way of another non-limiting example, be located more than ten kilometers from the site or from the building 2. The system controller 3 can, by way of yet another non-limiting example, be located more than one hundred kilometers from the site or from the building 2.

The system controller 3 advantageously comprises a power management system such as a power management system for the site 2. The system controller 3 ideally is a power management system such as a power management system for the site 2. More specifically, the system controller 3 can comprise a power management system for the building 2. The system controller 3 can also be a power management system for the building 2.

The system for heating and/or ventilation and/or air-conditioning 1 comprises at least one terminal unit 4-8. The system for heating and/or ventilation and/or air-conditioning 1 preferably comprises a plurality of terminal units 4-8. More specifically, a site 2 can comprise at least one terminal unit 4-8. The site 2 preferably comprises a plurality of terminal units 4-8. More specifically, a building 2 can comprise at least one terminal unit 4 - 8. The building 2 preferably comprises a plurality of terminal units 4 - 8.

At least one terminal unit 4 - 8 comprises a valve. The valve controls flow of a coolant and/or of a heating medium through the at least one terminal unit 4 - 8. According to an aspect of the system for heating and/or ventilation and/or air-conditioning 1, every terminal unit 4 - 8 comprises a valve. These valves control flows of a coolant and/or of a heating medium through their respective terminal units 4-8.

It is envisaged that one or more terminal units 4 - 8 comprise a heating device such as a radiator. It is also envisaged that one or more terminal units 4 - 8 comprise cooling devices such as chilled beams.

According to an aspect of the present disclosure, the one or more terminal units 4 - 8 comprise one or more thermal energy exchangers. According to another aspect of the present disclosure, the one or more terminal units 4 - 8 are one or more thermal energy exchangers.

One or more of the terminal units 4 - 8 comprise a valve having a valve controller. The valve controller advantageously comprises a microcontroller and/or a microprocessor. In an embodiment, the valve controller is a microcontroller and/or is a microprocessor. The valve controller preferably comprises a memory such as a non-volatile memory.

The valve controller ideally is or comprises an inexpensive and/or low-power system-on-a-chip microcontroller having integrated wireless connectivity. In a special embodiment, the system-on-a-chip microcontroller has a memory not exceeding one mebibyte. In another embodiment, the valve controller connects to an edge device.

The one or more valve controllers of the one or more terminal units 4 - 8 can comprise thermostats such as smart thermostats. The one or more valve controllers of the one or more terminal units 4 - 8 can also be thermostats. More specifically, the one or more valve controllers of the one or more terminal units can be smart thermostats.

The one or more valve controllers of the one or more terminal units 4 - 8 advantageously comprise one or more analog-to-digital converters. The one or more analog-to-digital converters provide conversion of analog signals into (digital) values. The one or more analog-to-digital converters can, by way of non-limiting example, convert signals indicative of valve positions into (digital) values. The one or more analog-to-digital converters can, by way of another non-limiting example, convert signals originating from temperature sensors into (digital) values. It is envisaged that the signals originating from temperature sensors are signals indicative of supply temperatures and/or indicative of temperatures at the site 2. The signals originating from temperature sensors can also be signals indicative of temperatures outside the site 2.

The one or more analog-to-digital converters can be integral parts of the one or more valve controllers of the one or more terminal units 4-8. That is, there are systems-on-a-chip, each system-on-a-chip having an analog-to-digital converter and a valve controller.

The one or more valve controllers of the one or more terminal units 4 - 8 ideally comprise one or more sigma-delta converters. The one or more sigma-delta converters provide conversion of analog signals into (digital) values. The one or more sigma-delta converters can, by way of non-limiting example, convert signals indicative of valve positions into (digital) values. The one or more sigma-delta converters can, by way of another non-limiting example, convert signals originating from temperature sensors into (digital) values. It is envisaged that the signals originating from temperature sensors are signals indicative of supply temperatures and/or indicative of temperatures at the site 2. The signals originating from temperature sensors can also be signals indicative of temperatures outside the site 2.

The one or more sigma-delta converters can be integral parts of the one or more valve controllers of the one or more terminal units 4-8. That is, there are systems-on-a-chip, each system-on-a-chip having a sigma-delta converter and a valve controller.

The valve controller is in operative communication with the system controller 3. A connection between the valve controller and the system controller 3 can be bidirectional. A bidirectional connection affords flexibility. A connection between the valve controller and the system controller 3 can also be unidirectional. Communication from the valve controller to the system controller 3 is facilitated by such a unidirectional connection. A unidirectional connection reduces complexity.

A communication link between the valve controller and the system controller 3 can, for example, rely on wireless solutions such as WLAN and/or KNX@ RF. A communication link between the valve controller and the system controller 3 can, for example, also rely on wireless solutions such as Thread and/or Zigbee and/or EnOcean®. The wireless communication link preferably involves a digital communication bus. The wireless communication link preferably involves a digital communication protocol.

A communication link between the valve controller and the system controller 3 can, for example, also rely on hard-wired connections such as Ethernet® cables and/or on KNX@ cables. The hard-wired communication link preferably involves a digital communication bus. The hard-wired communication link preferably involves a digital communication protocol.

According to an aspect of the present disclosure, all the terminal units 4 - 8 comprise a valve having a valve controller. The valve controllers advantageously each comprise a microcontroller and/or a microprocessor. In an embodiment, the valve controllers are microcontrollers and/or microprocessors. The valve controllers preferably each comprise a memory such as a non-volatile memory.

The valve controllers ideally are or comprise inexpensive and/or low-power system-on-a-chip microcontrollers, each system-on-a-chip microcontroller having integrated wireless connectivity. In a special embodiment, the system-on-a-chip microcontrollers each have a memory not exceeding one mebibyte.

The valve controllers advantageously comprise analog-to-digital converters. The analog-to-digital converters provide conversion of analog signals into (digital) values. The analog-to-digital converters can, by way of non-limiting example, convert signals indicative of valve positions into (digital) values. The analog-to-digital converters can, by way of another non-limiting example, convert signals originating from temperature sensors into (digital) values. It is envisaged that the signals originating from temperature sensors are signals indicative of supply temperatures and/or indicative of temperatures at the site 2. The signals originating from temperature sensors can also be signals indicative of temperatures outside the site 2.

The analog-to-digital converters can be integral parts of the valve controllers of the terminal units 4-8. That is, there are systems-on-a-chip, each system-on-a-chip having an analog-to-digital converter and a valve controller.

The valve controllers ideally comprise sigma-delta converters. The sigma-delta converters provide conversion of analog signals into (digital) values. The sigma-delta converters can, by way of non-limiting example, convert signals indicative of valve positions into (digital) values. The sigma-delta converters can, by way of another non-limiting example, convert signals originating from temperature sensors into (digital) values. It is envisaged that the signals originating from temperature sensors are signals indicative of supply temperatures and/or indicative of temperatures at the site 2. The signals originating from temperature sensors can also be signals indicative of temperatures outside the site 2.

The sigma-delta converters can be integral parts of the valve controllers of the terminal units 4-8. That is, there are systems-on-a-chip, each system-on-a-chip having a sigma-delta converter and a valve controller.

The valve controllers are in operative communication with the system controller 3. Connections between the valve controllers and the system controller 3 can be bidirectional. Bidirectional connections afford flexibility. Connections between the valve controller and the system controller 3 can also be unidirectional. Communication from the valve controllers to the system controller 3 is facilitated by such unidirectional connections. Unidirectional connections reduce complexity.

In an embodiment, the valve controllers connect to the system controller 3 in a hub and spoke topology. Alternatively, a network having a mesh topology connects the valve controllers to the system controller 3. In a special embodiment, the valve controllers and the system controller 3 form a full-mesh topology network.

A network comprising the valve controllers and the system controller 3 can, for example, rely on wireless solutions such as WLAN and/or KNX@ RF and/or Thread. A network comprising the valve controllers and the system controller 3 can, for example, also rely on wireless solutions such as Zigbee, and/or EnOcean®. Any communication within the wireless network preferably involves a digital communication bus. Any communication within the wireless network preferably involves a digital communication protocol.

A network comprising the valve controllers and the system controller 3 can, for example, also rely on hard-wired connections such as Ethernet® cables and/or on KNX@ cables. Any communication within the hard-wired network preferably involves a digital communication bus. Any communication within the hard-wired network preferably involves a digital communication protocol.

It is envisaged that the system controller 3 can identify valve controllers of terminal units 4 - 8. Identification can, by way of example, take place based on machine addresses of such valve controllers. That is, the valve controllers and/or the memories of the valve controllers store such machine addresses. The system controller 3 will then use a lookup table to identify the controllers of the terminal units 4 - 8. Identification can, by way of another example, take place based on vendor identities and/or product identities of such valve controllers. That is, the valve controllers and/or the memories of the valve controllers store such vendor identities and/or product identities. Accordingly, the valve controllers send their vendor identities and/or product identities to the system controller 3 for identification purposes.

Advantageously, the system controller 3 is operable to configure one or more of the valve controllers of the terminal units 4 - 8. In so doing, the system controller 3 can provide the one or more valve controllers data such as baud rates and/or logical addresses. The system controller 3 can also provide the one or more valve controllers data such as setpoints of room temperature. The system controller 3 can further provide the one or more valve controllers data such as setpoints of temperature within a zone.

Where the valve controllers are battery-operated, the valve controllers are preferably operable to receive signals indicative of the charging levels of their respective batteries. The valve controllers then produce values of charging levels based on these signals. Where a charging level is less than a threshold such as a predefined threshold, a low-battery alarm signal can be sent to the system controller 3.

The system controller 3 advantageously comprises one or more analog-to-digital converters. The one or more analog-to-digital converters provide conversion of analog signals into (digital) values. The one or more analog-to-digital converters can, by way of non-limiting example, convert signals indicative of valve positions into (digital) values. The one or more analog-to-digital converters can, by way of another non-limiting example, convert signals originating from temperature sensors into (digital) values. It is envisaged that the signals originating from temperature sensors are signals indicative of supply temperatures and/or indicative of temperatures at the site 2. The signals originating from temperature sensors can also be signals indicative of temperatures outside the site 2.

The one or more analog-to-digital converters can be integral parts of the system controller 3 of the terminal units 4 - 8. That is, there is a systems-on-a-chip having one or more analog-to-digital converters and the system controller 3.

The system controller 3 ideally comprises one or more sigma-delta converters. The one or more sigma-delta converters provide conversion of analog signals into (digital) values. The one or more sigma-delta converters can, by way of non-limiting example, convert signals indicative of valve positions into (digital) values. The one or more sigma-delta converters can, by way of another non-limiting example, convert signals originating from temperature sensors into (digital) values. It is envisaged that the signals originating from temperature sensors are signals indicative of supply temperatures and/or indicative of temperatures at the site 2. The signals originating from temperature sensors can also be signals indicative of temperatures outside the site 2.

The one or more sigma-delta converters can be integral parts of the system controller 3 of the terminal units 4 - 8. That is, there is a systems-on-a-chip having one or more sigma-delta converters and the system controller 3.

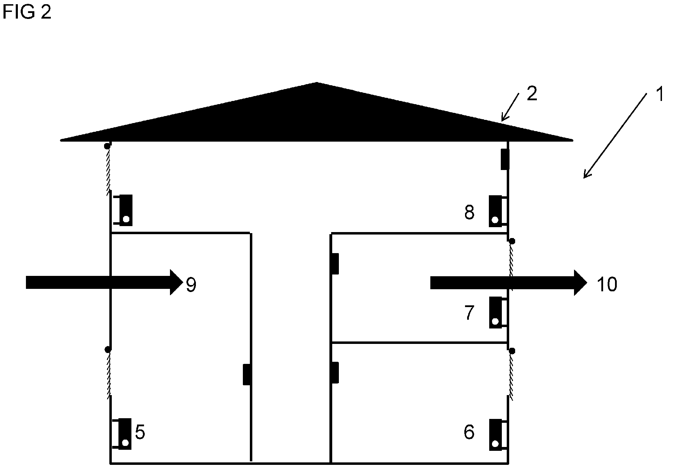

Now turning to FIG 2, an arrow 9 indicative of power intake of the site 2 and an arrow 10 indicative of power losses of the site 2 are shown. More specifically, FIG 2 illustrates flows of power 9, 10 into and out of a building 2.

The power intake of the site 2 depends on the one or more positions of the one or more valves of the terminal units 4 - 8. More specifically, the intake of the building 2 depends on the one or more positions of the one or more valves of the terminal units 4 - 8. The intake of the site 2 also depends on a setpoint temperature.

The one or more positions of the one or more valves of the terminal units 4 - 8 are readily available by way of measurements. The one or more positions of the one or more valves of the terminal units 4 - 8 can also be derived from one or more control signals. The control signals can, by way of non-limiting example, be produced and transmitted by the system controller 3. The control signals can, by of another non-limiting example, also be produced and transmitted by the one or more valve controllers of the terminal units 4 - 8. The control signals can, by of another non-limiting example, also be produced and transmitted by one or more thermostats of the system 1. More specifically, the control signals can be produced and transmitted by one or more thermostats of the site 2. The control signals can still be produced and transmitted by one or more thermostats of the building 2.

The one or more supply temperatures of the one or more valves of the terminal units 4 - 8 are readily available by way of measurements. To that end, one or more valves of the terminal units 4 - 8 can comprise one or more temperature sensors such as one or more thermocouples. The one or more temperature sensors are typically arranged in communication with the supply ends of the one or more valves. The one or more temperature sensors are preferably arranged in direct communication with the supply ends of the one or more valves.

The one or more supply temperatures of the one or more terminal units 4 - 8 can also be readily available by way of measurements. To that end, the one or more terminal units 4 - 8 can comprise one or more temperature sensors such as one or more thermocouples. The one or more temperature sensors are typically arranged in communication with the supply ends of the one or more terminal units 4 - 8. The one or more temperature sensors are preferably arranged in direct communication with the supply ends of the one or more terminal units 4 - 8.

By contrast, the power intake $\dot{Q}_{in}$ of the site 2 is in many cases not readily available by way of measurements. Instead, the power intake $\dot{Q}_{in}$ of the site 2 needs be estimated based on quantities such as the one or more valve positions. The power intake $\dot{Q}_{in}$ of the site 2 can also be estimated based on quantities such as a setpoint temperature. The power intake $\dot{Q}_{in}$ can be estimated based on the one or more valve positions and based on a setpoint temperature.

More specifically, the power intake $\dot{Q}_{in}$ of the building 2 is in many cases not readily available by way of measurements. Instead, the power intake $\dot{Q}_{in}$ of the building 2 needs be estimated based on quantities such as the one or more valve positions. The power intake $\dot{Q}_{in}$ of the building 2 can also be estimated based on quantities such as a setpoint temperature. The power intake $\dot{Q}_{in}$ can be estimated based on the one or more valve positions and based on a setpoint temperature.

Likewise, the power losses $\dot{Q}_{out}$ of the site 2 are in many cases not readily available by way of measurements. Instead, the power losses $\dot{Q}_{out}$ of the site 2 need be estimated based on quantities such as the outside temperature. The power losses $\dot{Q}_{out}$ of the site 2 can also be estimated based on quantities such as one or more values of room temperature. The one or more values of room temperature are typically room temperatures of one or more zones within the site 2. The one or more values of room temperature can also be room temperatures of one or more spaces within the site 2. The one or more values of room temperature can also be room temperatures of one or more rooms within the site 2.

The power losses $\dot{Q}_{out}$ of the building 2 are in many cases not readily available by way of measurements. Instead, the power losses $\dot{Q}_{out}$ of the building 2 need be estimated based on quantities such as the outside temperature. The power losses $\dot{Q}_{out}$ of the building 2 can also be estimated based on quantities such as one or more values of room temperature. The one or more values of room temperature are typically room temperatures of one or more zones within the building 2. The one or more values of room temperature can also be room temperatures of one or more spaces within the building 2. The one or more values of room temperature can also be room temperatures of one or more rooms within the building 2.

The power losses $\dot{Q}_{out}$ of the site 2 can also be estimated based on one or more setpoints of temperature. The one or more setpoints of temperature can, by way of non-limiting example, be produced and transmitted by the system controller 3. The setpoints can, by of another non-limiting example, also be produced and transmitted by the one or more valve controllers of the terminal units 4 - 8. The one or more setpoints can, by of another non-limiting example, also be produced and transmitted by one or more thermostats of the system 1. More specifically, the one or more setpoints of temperature can be produced and transmitted by one or more thermostats of the site 2. The one or more setpoints of temperature can still be produced and transmitted by one or more thermostats of the building 2.

In an embodiment, the power losses $\dot{Q}_{out}$ of the site 2 are estimated based on outside temperature and based on values of room temperature. The power losses $\dot{Q}_{out}$ of the site 2 can also be determined based on outside temperature and based on values of room temperature. The power losses $\dot{Q}_{out}$ of the site 2 can still be calculated based on outside temperature and based on values of room temperature.

More specifically, the power losses $\dot{Q}_{out}$ of the building 2 are estimated based on outside temperature and based on values of room temperature. The power losses $\dot{Q}_{out}$ of the building 2 can also be determined based on outside temperature and based on values of room temperature. The power losses $\dot{Q}_{out}$ of the building 2 can still be calculated based on outside temperature and based on values of room temperature.

In another embodiment, the power losses $\dot{Q}_{out}$ of the site 2 are estimated based on outside temperature and based on setpoints of temperature. The power losses $\dot{Q}_{out}$ of the site 2 can also be determined based on outside temperature and based on setpoints of temperature. The power losses $\dot{Q}_{out}$ of the site 2 can still be calculated based on outside temperature and based on setpoints of temperature.

More specifically, the power losses $\dot{Q}_{out}$ of the building 2 are estimated based on outside temperature and based on setpoints of temperature. The power losses $\dot{Q}_{out}$ of the building 2 can also be determined based on outside temperature and based on setpoints of temperature. The power losses $\dot{Q}_{out}$ of the building 2 can still be calculated based on outside temperature and based on setpoints of temperature.

In still another embodiment, the power losses $\dot{Q}_{out}$ of the site 2 are estimated based on values of room temperature and based on setpoints of temperature. The power losses $\dot{Q}_{out}$ of the site 2 can also be determined based on values of room temperature and based on setpoints of temperature. The power losses $\dot{Q}_{out}$ of the site 2 can still be calculated based on values of room temperature and based on setpoints of temperature.

More specifically, the power losses $\dot{Q}_{out}$ of the building 2 are estimated based on values of room temperature and based on setpoints of temperature. The power losses $\dot{Q}_{out}$ of the building 2 can also be determined based on values of room temperature and based on setpoints of temperature. The power losses $\dot{Q}_{out}$ of the building 2 can still be calculated based on values of room temperature and based on setpoints of temperature.

In yet another embodiment, the power losses $\dot{Q}_{out}$ of the site 2 are estimated based on outside temperature and on values of room temperature. Setpoints of temperature are also factored into the estimates of power losses $\dot{Q}_{out}$ of the site 2. The power losses $\dot{Q}_{out}$ of the site 2 can be determined based on outside temperature and on values of room temperature. Setpoints of temperature are also factored into the determinations of power losses $\dot{Q}_{out}$ of the site 2. The power losses $\dot{Q}_{out}$ of the site 2 can still be calculated based on outside temperature and on values of room temperature and on setpoints of temperature. Setpoints of temperature are also factored into the calculations of power losses $\dot{Q}_{out}$ of the site 2.

More specifically, the power losses $\dot{Q}_{out}$ of the building 2 are estimated based on outside temperature and on values of room temperature. Setpoints of temperature are also factored into the estimates of power losses $\dot{Q}_{out}$ of the building 2. The power losses $\dot{Q}_{out}$ of the building 2 can also be determined based on outside temperature and on values of room temperature. Setpoints of temperature are also factored into the determinations of power losses $\dot{Q}_{out}$ of the building 2. The power losses $\dot{Q}_{out}$ of the building 2 can still be calculated based on outside temperature and on values of room temperature. Setpoints of temperature are also factored into the calculations of power losses $\dot{Q}_{out}$ of the building 2.

Changes in power $\dot{Q}_{site}$ of a site 2 versus time are a function of power intake $\dot{Q}_{in}$ and a function of power losses $\dot{Q}_{out}$:

$$\dot{Q}_{site} = \dot{Q}_{in} - \dot{Q}_{out}$$

These changes in power $\dot{Q}_{site}$ relate to changes in temperature $\dot{T}_{site}$ at the site 2 via a value of specific heat $c_h$:

$$\dot{Q}_{site} = c_h \dot{T}_{site}$$

It follows that

$$\dot{Q}_{site} = \dot{Q}_{in} - \dot{Q}_{out} = c_h \dot{T}_{site}$$

and

$$\dot{Q}_{in} = c_h \dot{T}_{site} + \dot{Q}_{out}$$

Where power losses are a function of the temperature $T_{site}$ at the site 2 and of outside temperature $T_{out}$, the above relationship can be rewritten:

$$\dot{Q}_{in} = c_h \dot{T}_{site} + \dot{Q}_{out}(T_{site}, T_{out}) = f\left(\dot{T}_{site}, T_{site}, T_{out}\right)$$

If power losses $\dot{Q}_{out}$ are governed by convective heat transfer, a linear relationship will apply:

$$\dot{Q}_{out} = l \cdot (T_{site} - T_{out})$$

The power intake $\dot{Q}_{in,est}$ of the site 2 can then be estimated as

$$\dot{Q}_{in,est} = c_h \dot{T}_{site} + l \cdot (T_{site} - T_{out})$$

The power intake $\dot{Q}_{in,est}$ of the site 2 as estimated according to the above relationship depends strongly on short-term changes of the temperature $T_{site}$. Those changes can, by way of non-limiting examples, be caused by windows opened, solar radiation, blind positions, etc.

It is envisaged that the temperature $T_{site}$ at the site 2 is a mean temperature $T_{site}$ at the site 2. The mean temperature $T_{site}$ is preferably an arithmetic mean of temperatures at the site 2. The mean temperature $T_{site}$ can also be a geometric mean of temperatures at the site 2. In a preferred embodiment, the temperature $T_{site}$ at the site 2 is produced from a signal of a sensor arranged at the site 2. It is also envisaged that the changes in temperature $\dot{T}_{site}$ at the site 2 are mean changes in temperature $\dot{T}_{site}$ at the site 2. The mean changes in temperature $\dot{T}_{site}$ are preferably arithmetic means of changes in temperature at the site 2. The mean changes in temperature $\dot{T}_{site}$ can also be geometric means of changes in temperature at the site 2.

A sensor outside the site 2 can record a signal indicative of an outside temperature $T_{out}$. An outside temperature $T_{out}$ can then be produced from such a signal. Where a sensor outside the site 2 is unavailable, an outside temperature $T_{out}$ can be received from a nearby weather station. An outside temperature $T_{out}$ is advantageously received from a service provider via a computer network. For example, the system controller 3 can receive an outside temperature $T_{out}$ from a service provider via a computer network. A thermostat can, by way of non-limiting example, receive an outside temperature $T_{out}$ from a service provider via a computer network. Also, a valve controller of a valve of the one or more terminal units 4 - 8 can receive an outside temperature $T_{out}$. The outside temperature $T_{out}$ can be received from a service provider via a computer network such as the internet.

More specifically, changes in power $\dot{Q}_{building}$ of a building 2 versus time are a function of power intake $\dot{Q}_{in}$ and a function of power losses $\dot{Q}_{out}$:

$$\dot{Q}_{building} = \dot{Q}_{in} - \dot{Q}_{out}$$

These changes in power $\dot{Q}_{building}$ relate to changes in temperature $\dot{T}_{building}$ at the building 2 via a value of specific heat $c_h$:

$$\dot{Q}_{building} = c_h \dot{T}_{building}$$

It follows that

$$\dot{Q}_{building} = \dot{Q}_{in} - \dot{Q}_{out} = c_h \dot{T}_{building}$$

and

$$\dot{Q}_{in} = c_h \dot{T}_{building} + \dot{Q}_{out}$$

Where power losses are a function of the temperature $T_{building}$ at the building 2 and of outside temperature $T_{out}$, the above relationship can be rewritten:

$$\dot{Q}_{in} = c_h \dot{T}_{building} + \dot{Q}_{out}(T_{building}, T_{out}) = f(\dot{T}_{building}, T_{building}, T_{out})$$

If power losses $\dot{Q}_{out}$ are governed by convective heat transfer, a linear relationship will apply:

$$\dot{Q}_{out} = l \cdot (T_{building} - T_{out})$$

The power intake $\dot{Q}_{in,est}$ of the building 2 as estimated according to the above relationship depends strongly on short-term changes of the temperature $T_{building}$. Those changes can, by way of non-limiting examples, be caused by windows opened, solar radiation, blind positions, etc.

The power intake $\dot{Q}_{in,est}$ of the building 2 can then be estimated as

$$\dot{Q}_{in,est} = c_h \dot{T}_{building} + l \cdot (T_{building} - T_{out})$$

It is envisaged that the temperature $T_{building}$ in the building 2 is a mean temperature $T_{building}$ in the building 2. The mean temperature $T_{building}$ is preferably an arithmetic mean of temperatures within the building 2. The mean temperature $T_{building}$ can also be a geometric mean of temperatures within the building 2. In a preferred embodiment, the temperature $T_{building}$ in the building 2 is produced from a signal of a sensor arranged in the building 2. It is also envisaged that the changes in temperature $\dot{T}_{building}$ at the building 2 are mean changes in temperature within the building 2. The mean changes in temperature $\dot{T}_{building}$ are preferably arithmetic means of changes in temperature within the building 2. The mean changes in temperature $\dot{T}_{building}$ can also be geometric means of changes in temperature within the building 2.

A sensor outside the building 2 can record a signal indicative of an outside temperature $T_{out}$. An outside temperature $T_{out}$ can then be produced from such a signal. Where a sensor outside the building 2 is unavailable, an outside temperature $T_{out}$ can be received from a nearby weather station. An outside temperature $T_{out}$ is advantageously received from a service provider via a computer network. For example, the system controller 3 can receive an outside temperature $T_{out}$ from a service provider via a computer network. A thermostat can, by way of non-limiting example, receive an outside temperature $T_{out}$ from a service provider via a computer network. Also, a valve controller of a valve of the one or more terminal units 4 - 8 can receive an outside temperature $T_{out}$. The outside temperature $T_{out}$ can be received from a service provider via a computer network such as the internet.

Also, changes in power $\dot{Q}_{zone}$ of a zone versus time are a function of power intake $\dot{Q}_{in}$ and a function of power losses $\dot{Q}_{out}$:

$$\dot{Q}_{zone} = \dot{Q}_{in} - \dot{Q}_{out}$$

These changes in power $\dot{Q}_{zone}$ relate to changes in temperature $\dot{T}_{zone}$ within the zone via a value of specific heat $c_h$:

$$\dot{Q}_{zone} = c_h \dot{T}_{zone}$$

It follows that

$$\dot{Q}_{zone} = \dot{Q}_{in} - \dot{Q}_{out} = c_h \dot{T}_{zone}$$

and

$$\dot{Q}_{in} = c_h \dot{T}_{zone} + \dot{Q}_{out}$$

Where power losses are a function of the temperature $T_{zone}$ in the zone and of outside temperature $T_{out}$, the above relationship can be rewritten:

$$\dot{Q}_{in} = c_h \dot{T}_{zone} + \dot{Q}_{out}(T_{zone}, T_{out}) = f(\dot{T}_{zone}, T_{zone}, T_{out})$$

If power losses $\dot{Q}_{out}$ are governed by convective heat transfer, a linear relationship will apply:

$$\dot{Q}_{out} = l \cdot (T_{zone} - T_{out})$$

The power intake $\dot{Q}_{in,est}$ of the zone can then be estimated as

$$\dot{Q}_{in,est} = c_h \dot{T}_{zone} + l \cdot (T_{zone} - T_{out})$$

The power intake $\dot{Q}_{in,est}$ of the zone as estimated according to the above relationship depends strongly on short-term changes of the temperature $T_{zone}$. Those changes can, by way of non-limiting examples, be caused by windows opened, solar radiation, blind positions, etc.

It is envisaged that the temperature $T_{zone}$ in the zone is a mean temperature $T_{zone}$ in the zone. The mean temperature $T_{zone}$ is preferably an arithmetic mean of temperatures within the zone. The mean temperature $T_{zone}$ can also be a geometric mean of temperatures within the zone. In a preferred embodiment, the temperature $T_{zone}$ in the zone is produced from a signal of a sensor arranged in the zone. It is also envisaged that the changes in temperature $\dot{T}_{zone}$ in the zone are mean changes in temperature in the zone. The mean changes in temperature $\dot{T}_{zone}$ are preferably arithmetic means of changes in temperature within the zone. The mean changes in temperature $\dot{T}_{zone}$ can also be geometric means of changes in temperature within the zone.

A sensor outside the site 2 and outside the zone can record a signal indicative of an outside temperature $T_{out}$. An outside temperature $T_{out}$ can then be produced from such a signal. Where a sensor outside the site 2 and outside the zone is unavailable, an outside temperature $T_{out}$ can be received from a nearby weather station. An outside temperature $T_{out}$ is advantageously received from a service provider via a computer network. For example, the system controller 3 can receive an outside temperature $T_{out}$ from a service provider via a computer network. A thermostat can, by way of non-limiting example, receive an outside temperature $T_{out}$ from a service provider via a computer network. Also, a valve controller of a valve of the one or more terminal units 4 - 8 can receive an outside temperature $T_{out}$. The outside temperature $T_{out}$ can be received from a service provider via a computer network such as the internet.

Still more specifically, changes in power $\dot{Q}_{space}$ of a space versus time are a function of power intake $\dot{Q}_{in}$ and a function of power losses $\dot{Q}_{out}$:

$$\dot{Q}_{space} = \dot{Q}_{in} - \dot{Q}_{out}$$

These changes in power $\dot{Q}_{space}$ relate to changes in temperature $\dot{T}_{space}$ within the space via a value of specific heat $c_h$:

$$\dot{Q}_{space} = c_h \dot{T}_{space}$$

It follows that

$$\dot{Q}_{space} = \dot{Q}_{in} - \dot{Q}_{out} = c_h \dot{T}_{space}$$

and

$$\dot{Q}_{in} = c_h \dot{T}_{space} + \dot{Q}_{out}$$

Where power losses are a function of the temperature $T_{space}$ in the space and of outside temperature $T_{out}$, the above relationship can be rewritten:

$$\dot{Q}_{in} = c_h \dot{T}_{space} + \dot{Q}_{out}(T_{space}, T_{out}) = f(\dot{T}_{space}, T_{space}, T_{out})$$

If power losses $\dot{Q}_{out}$ are governed by convective heat transfer, a linear relationship will apply:

$$\dot{Q}_{out} = l \cdot (T_{space} - T_{out})$$

The power intake $\dot{Q}_{in,est}$ of the space can then be estimated as

$$\dot{Q}_{in,est} = c_h \dot{T}_{space} + l \cdot (T_{space} - T_{out})$$

The power intake $\dot{Q}_{in,est}$ of the space as estimated according to the above relationship depends strongly on short-term changes of the temperature $T_{space}$. Those changes can, by way of non-limiting examples, be caused by windows opened, solar radiation, blind positions, etc.

It is envisaged that the temperature $T_{space}$ in the space is a mean temperature $T_{space}$ in the space. The mean temperature $T_{space}$ is preferably an arithmetic mean of temperatures within the space. The mean temperature $T_{space}$ can also be a geometric mean of temperatures within the space. In a preferred embodiment, the temperature $T_{space}$ in the space is produced from a signal of a sensor arranged in the space. It is also envisaged that the changes in temperature $\dot{T}_{space}$ in the space are mean changes in temperature in the space. The mean changes in temperature $\dot{T}_{space}$ are preferably arithmetic means of changes in temperature within the space. The mean changes in temperature $\dot{T}_{space}$ can also be geometric means of changes in temperature within the space.

A sensor outside the site 2 and outside the space can record a signal indicative of an outside temperature $T_{out}$. An outside temperature $T_{out}$ can then be produced from such a signal. Where a sensor outside the site 2 and outside the space is unavailable, an outside temperature $T_{out}$ can be received from a nearby weather station. An outside temperature $T_{out}$ is advantageously received from a service provider via a computer network. For example, the system controller 3 can receive an outside temperature $T_{out}$ from a service provider via a computer network. A thermostat can, by way of non-limiting example, receive an outside temperature $T_{out}$ from a service provider via a computer network. Also, a valve controller of a valve of the one or more terminal units 4 - 8 can receive an outside temperature $T_{out}$. The outside temperature $T_{out}$ can be received from a service provider via a computer network such as the internet.

Yet more specifically, changes in power $\dot{Q}_{room}$ of a room versus time are a function of power intake $\dot{Q}_{in}$ and a function of power losses $\dot{Q}_{out}$:

$$\dot{Q}_{room} = \dot{Q}_{in} - \dot{Q}_{out}$$

These changes in power $\dot{Q}_{room}$ relate to changes in temperature $\dot{T}_{room}$ within the room via a value of specific heat $c_h$:

$$\dot{Q}_{room} = c_h \dot{T}_{room}$$

It follows that

$$\dot{Q}_{room} = \dot{Q}_{in} - \dot{Q}_{out} = c_h \dot{T}_{room}$$

and

$$\dot{Q}_{in} = c_h \dot{T}_{room} + \dot{Q}_{out}$$

Where power losses are a function of the temperature $T_{room}$ in the room and of outside temperature $T_{out}$, the above relationship can be rewritten:

$$\dot{Q}_{in} = c_h \dot{T}_{room} + \dot{Q}_{out}(T_{room}, T_{out}) = f\left(\dot{T}_{room}, T_{room}, T_{out}\right)$$

If power losses $\dot{Q}_{out}$ are governed by convective heat transfer, a linear relationship will apply:

$$\dot{Q}_{out} = l \cdot (T_{room} - T_{out})$$

The power intake $\dot{Q}_{in,est}$ of the room can then be estimated as

$$\dot{Q}_{in,est} = c_h \dot{T}_{room} + l \cdot (T_{room} - T_{out})$$

The power intake $\dot{Q}_{in,est}$ of the room as estimated according to the above relationship depends strongly on short-term changes of the temperature $T_{room}$. Those changes can, by way of non-limiting examples, be caused by windows opened, solar radiation, blinds positions, etc.

It is envisaged that the temperature $T_{room}$ in the room is a mean temperature $T_{room}$ in the room. The mean

temperature $T_{room}$ is preferably an arithmetic mean of temperatures within the room. The mean temperature $T_{room}$ can also be a geometric mean of temperatures within the room. In a preferred embodiment, the temperature $T_{room}$ in the room is produced from a signal of a sensor arranged in the room. It is also envisaged that the changes in temperature $\dot{T}_{room}$ in the room are mean changes in temperature in the room. The mean changes in temperature $\dot{T}_{room}$ are preferably arithmetic means of changes in temperature within the room. The mean changes in temperature $\dot{T}_{room}$ can also be geometric means of changes in temperature within the room.

A sensor outside the site 2 and outside the room can record a signal indicative of an outside temperature $T_{out}$. An outside temperature $T_{out}$ can then be produced from such a signal. Where a sensor outside the site 2 and outside the room is unavailable, an outside temperature $T_{out}$ can be received from a nearby weather station. An outside temperature $T_{out}$ is advantageously received from a service provider via a computer network. For example, the system controller 3 can receive an outside temperature $T_{out}$ from a service provider via a computer network. A thermostat can, by way of non-limiting example, receive an outside temperature $T_{out}$ from a service provider via a computer network. Also, a valve controller of a valve of the one or more terminal units 4 - 8 can receive an outside temperature $T_{out}$. The outside temperature $T_{out}$ can be received from a service provider via a computer network such as the internet.

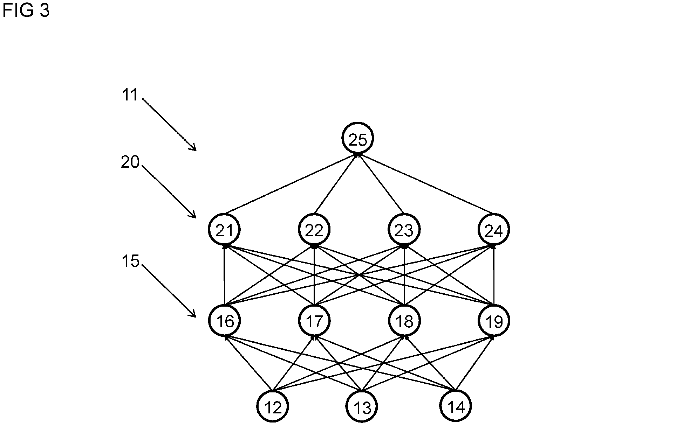

To mitigate adverse influence of short-term fluctuations of temperature, an approach involving artificial intelligence is chosen. FIG 3 shows a calibrated model in the form of a neural network 11. The neural network 11 of FIG 3 is employed to estimate cooling power and/or heating power $\dot{Q}_{in,est}$. Advantageously, the neural network 11 of FIG 3 is employed to determine cooling power and/or heating power $\dot{Q}_{in,est}$. Ideally, the neural network 11 of FIG 3 is employed to calculate cooling power and/or heating power $\dot{Q}_{in,est}$.

The neural network 11 comprises input neurons 12 - 14. Preferably, a first input neuron 12 corresponds to or is associated with a setpoint temperature. The setpoint temperature can, by way of non-limiting example, be a setpoint temperature of a site 2 and/or of a building 2. The setpoint temperature can, by way of another non-limiting example, also be a setpoint temperature of a zone and/or of a space and/or of a room. In an embodiment, a second input neuron 13 corresponds to or is associated with a temperature $T_{site}$ at the site 2. In another embodiment, the second input neuron 13 corresponds to or is associated with a temperature $T_{building}$ within the building 2. In still another embodiment, the second input neuron 13 corresponds to or is associated with a temperature $T_{zone}$ within a zone. In yet another embodiment, the second input neuron 13 corresponds to or is associated with a temperature $T_{space}$ within a space. It is also envisaged that the second input neuron 13 corresponds to or is associated with a temperature $T_{room}$ within a room. Preferably, a third input neuron 14 corresponds to or is associated with a control signal indicative of a valve position. More specifically, a third input neuron 14 can correspond to or be associated with a control signal indicative of a valve stroke. Ideally, a third input neuron 14 corresponds to or is associated with a valve position. More specifically, the third input neuron 14 can correspond to or be associated with a valve stroke.

Any input to the neural network 11 is ideally normalised. The neural network 11 also comprises an output neuron 25. The output neuron 25 corresponds to or is associated with an estimated intake of power $\dot{Q}_{in,est}$. The estimated intake of power $\dot{Q}_{in,est}$ advantageously corresponds to an estimated cooling power and/or an estimated heating power. The estimated intake of power $\dot{Q}_{in,est}$ ideally is an estimated cooling power and/or an estimated heating power.

The neural network 11 also comprises one or more hidden layers 15, 20, each layer 15, 20 having one or more hidden neurons 16 - 19, 21 - 24. In another embodiment, the neural network 11 comprises two layers 15, 20 of hidden neurons. The neurons 16 - 19, 21 - 24 can, by way of non-limiting example, have activation functions such as sigmoid

$$sig(x) = \frac{1}{1 + e^x}$$

and/or hyperbolic tangent and/or step-wise activation and/or rectified linear unit functions. The neurons 16- 19, 21 - 24 are advantageously biased. The neural network 11 is ideally trained under test conditions. A series of measurements obtained under various test conditions is employed to train the neural network 11.

The neural network 11 can, by way of non-limiting example, be trained by a supervised training algorithm such as backpropagation. It is also envisaged that neural network 11 is or has been trained using an evolutionary algorithm such as a genetic algorithm. The skilled artisan can combine training algorithms. A genetic algorithm can, by way of example, be employed to find a coarse estimate of the weights of the connections of neural network 11. A backpropagation algorithm is then employed to further improve on the performance of the network 11.

After training the configuration of neural network 11 and/or the weights of the connections of neural network 11 are saved in a memory. The memory preferably is a non-volatile memory. The configuration of the neural network 11 and/or the weights of the connections of the neural network 11 define a procedure of estimating power intake $\dot{Q}_{in,est}$. The procedure of estimating power intake $\dot{Q}_{in,est}$ preferably is a procedure of estimating cooling power and/or heating power. The procedure is advantageously applied to a site 2. The procedure can also be applied to a building 2. The procedure is advantageously applied to a zone within a site 2 or within a building 2. The procedure is ideally applied to a space such as a space within a site 2 or within a building 2. The procedure can also be applied to a room such as a room within a site 2 or within a building 2.

In practise, the neural network comprises an input layer as outlined above. A first dense layer connects to the input layer. The first dense layer has 182 biased neurons. Each of these neurons has a rectified linear unit (relu) activation function:

$$relu(x) = \max(0, x)$$

The first dense layer provides a plurality of connections to the previous layer. The number of connections to the previous layer is commensurate with the neurons of the input layer and with the neurons of the first dense layer. A second dense layer connects to the first dense layer. The second dense layer has 182 biased neurons. Each of these neurons has a rectified linear unit (relu) activation function:

$$relu(x) = \max(0, x)$$

The second dense layer provides a plurality of connections to the previous layer. The number of connections to the previous layer is commensurate with the neurons of the first dense layer and with the neurons of the second dense layer. A third dense layer connects to the second dense layer. The third dense layer has 182 biased neurons. Each of these neurons has a rectified linear unit (relu) activation function:

$$relu(x) = \max(0, x)$$

The third dense layer provides a plurality of connections to the previous layer. The number of connections to the previous layer is commensurate with the neurons of the second dense layer and with the neurons of the third dense layer. A fourth dense layer connects to the third dense layer. The fourth dense layer has 182 biased neurons. Each of these neurons has a rectified linear unit (relu) activation function:

$$relu(x) = \max(0, x)$$

The fourth dense layer provides a plurality of connections to the previous layer. The number of connections to the previous layer is commensurate with the neurons of the third dense layer and with the neurons of the fourth dense layer. A fifth dense layer connects to the fourth dense layer. The fifth dense layer has a single biased output neuron. The output neuron has a linear activation function:

$$linear(x) = x$$

The fifth dense layer provides a plurality of connections to the previous layer. The number of connections to the previous layer is commensurate with the number of neurons of the fourth dense layer. The number of connections to the previous layer is also commensurate with the single neuron of the fifth dense layer.

Activation functions in the form of rectified linear unit functions mitigate issues due to vanishing gradients. Consequently, the calibrated network and/or the neural network 11 may employ single precision floating point numbers rather than double precision floating point numbers as weights. The calibrated network and/or the neural network 11 will require less memory.

The neural network 11 is or has been trained using backpropagation. To that end, a data set is split into a training data set and a test data set. The sets contain data indicative of values provided to the input neurons of the network and indicative of the output neuron of the network. The below table provides examples of such data:

| setpoint temperature | site temperature $T_{site}$/ building temperature $T_{building}$/ zone temperature $T_{zone}$/ space temperature $T_{space}$/ room temperature $T_{room}$ | valve position | intake of power $\dot{Q}_{in}$ |
|---|---|---|---|
| 292.15 Kelvin | 292.02 Kelvin | 28.5 % | 26.0 W |

(continued)

| setpoint temperature | site temperature $T_{site}$/ building temperature $T_{building}$/ zone temperature $T_{zone}$/ space temperature $T_{space}$/ room temperature $T_{room}$ | valve position | intake of power $\dot{Q}_{in}$ |
|---|---|---|---|
| 292.15 Kelvin | 291.99 Kelvin | 37.1 % | 119 W |
| 292.15 Kelvin | 291.98 Kelvin | 43.4 % | 313 W |
| 292.15 Kelvin | 291.97 Kelvin | 48.4 % | 460 W |
| 292.15 Kelvin | 291.97 Kelvin | 52.6 % | 568 W |

The trained neural network 11 can be employed to control a system for heating and/or ventilation and/or air-conditioning 1 at the site 2. The trained neural network 11 can also be employed to control a system for heating and/or ventilation 1 and/or air-conditioning at the building 2. The trained neural network 11 can still be employed to control a system for heating and/or ventilation and/or air-conditioning 1 within a zone. The zone can be a zone of a site or of a building 2. The trained neural network 11 can also be employed to control a system for heating and/or ventilation and/or air-conditioning 1 within a space. The space can be a space of a site or of a building 2. The trained neural network 11 can still be employed to control a system for heating and/or ventilation and/or air-conditioning 1 within a room. The room can be a room of a site or of a building 2.

The trained neural network 11 can also be employed by a thermostat such as a smart thermostat. The thermostat can comprise a display and a processor. The processor of the thermostat estimates power intake $\dot{Q}_{in,est}$ via the neural network 11. Preferably, the processor estimates cooling power and/or heating power $\dot{Q}_{in,est}$ via the neural network 11. The processor produces a graphics signal from the estimate and sends the estimate to the display. The display of the thermostat shows the estimate of power intake $\dot{Q}_{in,est}$ to a user and/or to an operator. The display of the thermostat advantageously shows the estimate of cooling power and/or heating power $\dot{Q}_{in,est}$ to a user and/or to an operator. Preferably, the display of the thermostat shows the estimate to a user and/or to an operator via a graphical user interface.

The trained neural network 11 can also be employed by a system controller 3. The system controller 3 can comprise a display and a processor. The processor of the system controller 3 estimates power intake $\dot{Q}_{in,est}$ via the neural network 11. Preferably, the processor estimates cooling power and/or heating power $\dot{Q}_{in,est}$ via the neural network 11. The processor produces a graphics signal from the estimate and sends the estimate to the display. The display of the system controller 3 shows the estimate of power intake $\dot{Q}_{in,est}$ to a user and/or to an operator. The display of the system controller 3 advantageously shows the estimate of cooling power and/or heating power $\dot{Q}_{in,est}$ to a user and/or to an operator.

Preferably, the display of the system controller 3 shows the estimate to a user and/or to an operator via a graphical user interface.

A grid operator can rely on one or more estimates produced by the neural network 11. The grid operator can, by way of non-limiting example, receive one or more estimates of power intake $\dot{Q}_{in,est}$ at the site 2. More specifically, the grid operator can receive one or more estimates of cooling power and/or of heating power at the site 2. The grid operator can then produce one or more demand response signals based on the received one or more estimates. The grid operator sends these one or more demand response signals back to the site 2. Power can then be curtailed at the site 2 in consequence of the one or more demand response signal.

The grid operator can, by way of another non-limiting example, receive one or more estimates of power intake $\dot{Q}_{in,est}$ at a building 2. More specifically, the grid operator can receive one or more estimates of cooling power and/or of heating power at the building 2. The grid operator can then produce one or more demand response signals based on the received one or more estimates. The grid operator sends these one or more demand response signals back to the building 2. Power can then be curtailed at the building 2 in consequence of the one or more demand response signal.

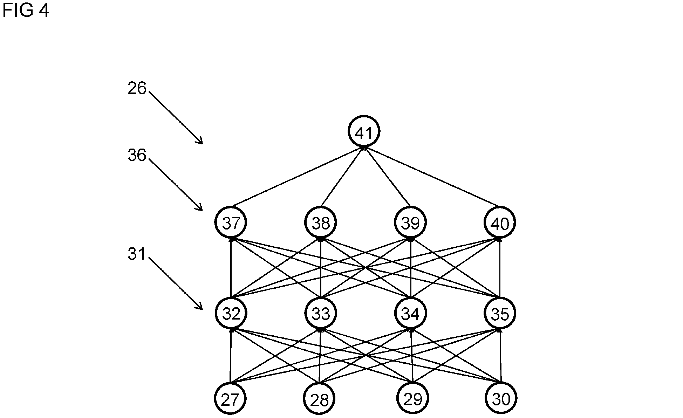

The neural network 26 as shown in FIG 4 comprises input neurons 27 - 30. Preferably, a first input neuron 27 corresponds to or is associated with a setpoint temperature. The setpoint temperature can, by way of non-limiting example, be a setpoint temperature of a site 2 and/or of a building 2. The setpoint temperature can, by way of another non-limiting example, also be a setpoint temperature of a zone and/or of a space and/or of a room. In an embodiment, a second input neuron 28 corresponds to or is associated with a temperature $T_{site}$ at the site 2. In another embodiment, the second input neuron 28 corresponds to or is associated with a temperature $T_{building}$ within the building 2. In still another embodiment, the second input neuron 28 corresponds to or is associated with a temperature $T_{zone}$ within a zone. In yet another embodiment, the second input neuron 28 corresponds to or is associated with a temperature $T_{space}$ within a space. It is also envisaged that the second input neuron 28 corresponds to or is associated with a temperature $T_{room}$ within a room. Preferably, a third input neuron 29 corresponds to or is associated with a control signal indicative of a valve position. More specifically, a third input neuron 29 can correspond to or be associated with a control signal indicative of a valve stroke. Ideally, a third input neuron 29 corresponds to or is associated with a valve position. More specifically, the third input neuron 29 can correspond to or be associated with a valve stroke. A fourth input neuron 30 corresponds to or is associated with outside temperature $T_{out}$.

Any input to the neural network 26 is ideally normalised. The neural network 26 also comprises an output neuron 41. The output neuron 41 corresponds to or is associated with an estimated intake of power $\dot{Q}_{in,est}$. The estimated intake of power $\dot{Q}_{in,est}$ advantageously corresponds to an estimated cooling power and/or an estimated heating power. The estimated intake of power $\dot{Q}_{in,est}$ ideally is an estimated cooling power and/or an estimated heating power.

The neural network 26 also comprises one or more hidden layers 31, 36, each layer 31, 36 having one or more hidden neurons 32 - 35, 37 - 40. In another embodiment, the neural network 26 comprises two layers 31, 36 of hidden neurons. The neurons 32 - 35, 37 - 40 can, by way of non-limiting example, have activation functions such as sigmoid

$$sig(x) = \frac{1}{1 + e^x}$$

and/or hyperbolic tangent and/or step-wise activation and/or rectified linear unit functions. The neurons 32 - 35, 37 - 40 are advantageously biased. The neural network 26 is ideally trained under test conditions. A series of measurements obtained under various test conditions is employed to train the neural network 26.

The neural network 26 can, by way of non-limiting example, be trained by a supervised training algorithm such as backpropagation. It is also envisaged that neural network 26 is or has been trained using an evolutionary algorithm such as a genetic algorithm. The skilled artisan can combine training algorithms. A genetic algorithm can, by way of example, be employed to find a coarse estimate of the weights of the connections of neural network 26. A backpropagation algorithm is then employed to further improve on the performance of the network 26.

After training the configuration of neural network 26 and/or the weights of the connections of neural network 26 are saved in a memory. The memory preferably is a non-volatile memory. The configuration of the neural network 26 and/or the weights of the connections of the neural network 26 define a procedure of estimating power intake $\dot{Q}_{in,est}$. The procedure of estimating power intake $\dot{Q}_{in,est}$ preferably is a procedure of estimating cooling power and/or heating power. The procedure is advantageously applied to a site 2. The procedure can also be applied to a building 2. The procedure is advantageously applied to a zone within a site 2 or within a building 2. The procedure is ideally applied to a space such as a space within a site 2 or within a building 2. The procedure can also be applied to a room such as a room within a site 2 or within a building 2.

In practise, the neural network comprises an input layer as outlined above. A first dense layer connects to the input layer. The first dense layer has 182 biased neurons. Each of these neurons has a rectified linear unit (relu) activation function:

$$relu(x) = \max(0, x)$$

The first dense layer provides a plurality of connections to the previous layer. The number of connections to the previous layer is commensurate with the neurons of the input layer and with the neurons of the first dense layer. A second dense layer connects to the first dense layer. The second dense layer has 182 biased neurons. Each of these neurons has a rectified linear unit (relu) activation function:

$$relu(x) = \max(0, x)$$

The second dense layer provides a plurality of connections to the previous layer. The number of connections to the previous layer is commensurate with the neurons of the first dense layer and with the neurons of the second dense layer. A third dense layer connects to the second dense layer. The third dense layer has 182 biased neurons. Each of these neurons has a rectified linear unit (relu) activation function:

$$relu(x) = \max(0, x)$$

The third dense layer provides a plurality of connections to the previous layer. The number of connections to the previous layer is commensurate with the neurons of the second dense layer and with the neurons of the third dense layer. A fourth dense layer connects to the third dense layer. The fourth dense layer has 182 biased neurons. Each of these neurons has a rectified linear unit (relu) activation function:

$$relu(x) = \max(0, x)$$

The fourth dense layer provides a plurality of connections to the previous layer. The number of connections to the previous layer is commensurate with the neurons of the third dense layer and with the neurons of the fourth dense layer. A fifth dense layer connects to the fourth dense layer. The fifth dense layer has a single biased output neuron. The output neuron has a linear activation function:

$$linear(x) = x$$

The fifth dense layer provides a plurality of connections to the previous layer. The number of connections to the previous layer is commensurate with the number of neurons of the fourth dense layer. The number of connections to the previous layer is also commensurate with the single neuron of the fifth dense layer.

Activation functions in the form of rectified linear unit functions mitigate issues due to vanishing gradients. Consequently, the calibrated network and/or the neural network 26 may employ single precision floating point numbers rather than double precision floating point numbers as weights. The calibrated network and/or the neural network 26 will require less memory.

The neural network 26 is or has been trained using backpropagation. To that end, a data set is split into a training data set and a test data set. The sets contain data indicative of values provided to the input neurons of the network and indicative of the output neuron of the network. The below table provides examples of such data:

| setpoint temperature | site temperature $T_{site}$/ building temperature $T_{building}$/ zone temperature $T_{zone}$/ space temperature $T_{space}$/ room temperature $T_{room}$ | valve position | outside temperature $T_{out}$ | intake of power $\dot{Q}_{in}$ |
|---|---|---|---|---|
| 292.15 Kelvin | 292.02 Kelvin | 28.5 % | 279.45 Kelvin | 26.0 W |
| 292.15 Kelvin | 291.99 Kelvin | 37.1 % | 277.51 Kelvin | 119 W |
| 292.15 Kelvin | 291.98 Kelvin | 43.4 % | 278.69 Kelvin | 313 W |
| 292.15 Kelvin | 291.97 Kelvin | 48.4 % | 276.33 Kelvin | 460 W |
| 292.15 Kelvin | 291.97 Kelvin | 52.6 % | 271.85 Kelvin | 568 W |

The trained neural network 26 can be employed to control a system for heating and/or ventilation and/or air-cond5itioning 1 at the site 2. The trained neural network 26 can also be employed to control a system for heating and/or ventilation 1 and/or air-conditioning at the building 2. The trained neural network 26 can still be employed to control a system for heating and/or ventilation and/or air-conditioning 1 within a zone. The zone can be a zone of a site or of a building 2. The trained neural network 26 can also be employed to control a system for heating and/or ventilation and/or air-conditioning 1 within a space. The space can be a space of a site or of a building 2. The trained neural network 26 can still be employed to control a system for heating and/or ventilation and/or air-conditioning 1 within a room. The room can be a room of a site or of a building 2.

The trained neural network 26 can also be employed by a thermostat such as a smart thermostat. The thermostat can comprise a display and a processor. The processor of the thermostat estimates power intake $\dot{Q}_{in,est}$ via the neural network 26. Preferably, the processor estimates cooling power and/or heating power $\dot{Q}_{in,est}$ via the neural network 26. The processor produces a graphics signal from the estimate and sends the estimate to the display. The display of the thermostat shows the estimate of power intake $\dot{Q}_{in,est}$ to a user and/or to an operator. The display of the thermostat advantageously shows the estimate of cooling power and/or heating power $\dot{Q}_{in,est}$ to a user and/or to an operator. Preferably, the display of the thermostat shows the estimate to a user and/or to an operator via a graphical user interface.

The trained neural network 26 can also be employed by a system controller 3. The system controller 3 can comprise a display and a processor. The processor of the system controller 3 estimates power intake $\dot{Q}_{in,est}$ via the neural network 26. Preferably, the processor estimates cooling power and/or heating power $\dot{Q}_{in,est}$ via the neural network 26. The processor produces a graphics signal from the estimate and sends the estimate to the display. The display of the system controller 3 shows the estimate of power intake $\dot{Q}_{in,est}$ to a user and/or to an operator. The display of the system controller 3 advantageously shows the estimate of cooling power and/or heating power $\dot{Q}_{in,est}$ to a user and/or to an operator. Preferably, the display of the system controller 3 shows the estimate to a user and/or to an operator via a graphical user interface.

A grid operator can rely on one or more estimates produced by the neural network 26. The grid operator can, by way of non-limiting example, receive one or more estimates of power intake $\dot{Q}_{in,est}$ at the site 2. More specifically, the grid operator can receive one or more estimates of cooling power and/or of heating power at the site 2. The grid operator can then produce one or more demand response signals based on the received one or more estimates. The grid operator sends these one or more demand response signals back to the site 2. Power can then be curtailed at the site 2 in consequence of the one or more demand response signal.

The grid operator can, by way of another non-limiting example, receive one or more estimates of power intake $\dot{Q}_{in,est}$ at a building 2. More specifically, the grid operator can receive one or more estimates of cooling power and/or of heating power at the building 2. The grid operator can then produce one or more demand response signals based on the received one or more estimates. The grid operator sends these one or more demand response signals back to the building 2. Power can then be curtailed at the building 2 in consequence of the one or more demand response signal.

Any steps of a method according to the present disclosure can be embodied in hardware and/or in a software module executed by a processor. Any steps of such a method can also be embodied in a software module executed by a processor inside a container using operating system level virtualisation. Any steps of such a method can still be embodied in a cloud computing arrangement. It is envisaged that any steps of a method according to the present disclosure is implemented in a combination of the above embodiments. The software may include a firmware and/or a hardware driver run by the operating system and/or an application program. Thus, the disclosure also relates to a computer program product for performing the operations presented herein. If implemented in software, the functions described may be stored as one or more instructions on a computer-readable medium. Storage media that can be used include, by way of non-limiting examples, random access memory (RAM) and/or read only memory (ROM) and/or flash memory. Storage media can, by way of non-limiting examples, also include EPROM memory and/or EEPROM memory and/or registers and/or a hard disk and/or a removable disk. Further storage media can, by way of non-limiting examples, include other optical disks and/or any available media that can be accessed by a computer. Storage media can still, by way of non-limiting example, include any other IT equipment and appliance.

Reference numerals

1 system for heating and/or ventilation and/or air-conditioning
2 site such as a building
3 system controller
4 - 8 terminal units such as thermal energy exchangers
9 arrow indicative of power intake
10 arrow indicative of power loss
11 neural network
12 - 14 input nodes
15 hidden layer
16 - 19 nodes
20 hidden layer
21 - 24 nodes
25 output node
26 neural network
27 - 30 input nodes
31 hidden layer
32 - 35 nodes
36 hidden layer
37 - 40 nodes
41 output node

**Claims**

1. A method of estimating a heat transfer $\dot{Q}_{in,est}$ via one or more thermal energy exchangers (4 - 8), the method comprising the steps of:

   acquiring a signal indicative of a setpoint temperature;
   acquiring a signal indicative of an inside temperature at a site (2);
   acquiring one or more signals indicative of positions of valves of the one or more thermal energy exchangers (4 - 8);
   producing a value of setpoint temperature from the signal indicative of the setpoint temperature;
   producing a value of inside temperature $T_{site}$ at the site (2) from the signal indicative of inside temperature;
   producing a value of position from the one or more signals indicative of positions of the valves;
   providing a calibrated model (11; 26) with the value of setpoint temperature and with the value of inside temperature $T_{site}$ at the site (2) and with the value of position; and
   using the calibrated model (11; 26) to estimate the heat transfer $\dot{Q}_{in,est}$ via the one or more thermal energy exchangers (4 - 8).

2. The method according to claim 1, the method comprising the steps of:

   using the calibrated model (11; 26) to normalise the value of setpoint temperature;
   using the calibrated model (11; 26) to normalise the value of inside temperature $T_{site}$ at the site (2);
   using the calibrated model (11; 26) to normalise the value of position; and
   using the calibrated model (11; 26) to estimate the heat transfer $\dot{Q}_{in,est}$ via the one or more thermal energy exchangers (4 - 8) based on the normalised value of setpoint temperature and based on the normalised value of inside temperature at the site (2) and based on the normalised value of position.

3. The method according to any of the claims 1 to 2, the method comprising the steps of:

   producing one or more individual values by producing an individual value from each signal indicative of a position of a valve; and
   producing the value of position by determining a mean of the one or more individual values.

4. The method according to claim 2 or according to claims 2 and 3, the method comprising the step of:
   using the calibrated model (11) to estimate the heat transfer $\dot{Q}_{in,est}$ via the one or more thermal energy exchangers (4 - 8) exclusively as a function of the normalised value of setpoint temperature and of the normalised value of inside temperature at the site (2) and of the normalised value of position.

5. The method according to any of the claims 1 to 3, the method comprising the steps of:

   acquiring a signal indicative of an outside temperature outside the site (2);
   producing a value of outside temperature $T_{out}$ from the signal indicative of outside temperature;
   providing the calibrated model (26) with the value of setpoint temperature and with the value of inside temperature $T_{site}$ at the site (2) and with the value of position and with the value of outside temperature $T_{out}$; and
   using the calibrated model (26) to estimate the heat transfer $\dot{Q}_{in,est}$ via the one or more thermal energy exchangers (4 - 8) based on the value of setpoint temperature and based on the value of inside temperature $T_{site}$ at the site (2) and based on the value of position and based on the value of outside temperature $T_{out}$

6. The method according to claim 5, the method comprising the step of:
   acquiring the signal indicative of the outside temperature outside the site (2) by reading the signal indicative of outside temperature from a sensor outside the site (2).

7. The method according to claim 5, the method comprising the step of:
   acquiring the signal indicative of the outside temperature outside the site (2) by connecting to a computer network and by receiving from the network a data package comprising the signal indicative of the outside temperature and by extracting the signal indicative of the outside temperature from the data package.

8. The method according to any of the claims 5 to 6, the method comprising the steps of:

using the calibrated model (26) to normalise the value of setpoint temperature;
using the calibrated model (26) to normalise the value of inside temperature $T_{site}$ at the site (2);
using the calibrated model (26) to normalise the value of position;
using the calibrated model (26) to normalise the value of outside temperature $T_{out}$; and
using the calibrated model (26) to estimate the heat transfer $\dot{Q}_{in,est}$ via the one or more thermal energy exchangers (4 - 8) based on the normalised value of setpoint temperature and based on the normalised value of inside temperature at the site (2) and based on the normalised value of position and based on the normalised value of outside temperature.

9. The method according to any of the claims 5 to 7, the method comprising the step of:
using the calibrated model (26) to estimate the heat transfer $\dot{Q}_{in,est}$ via the one or more thermal energy exchangers (4 - 8) exclusively as a function of the value of setpoint temperature and of the value of inside temperature $T_{site}$ at the site (2) and of the value of position and of the value of outside temperature $T_{out}$.

10. The method according to claim 8, the method comprising the step of:
using the calibrated model (26) to estimate the heat transfer $\dot{Q}_{in,est}$ via the one or more thermal energy exchangers (4 - 8) exclusively as a function of the normalised value of setpoint temperature and of the normalised value of inside temperature at the site (2) and of the normalised value of position and of the normalised value of outside temperature.

11. The method according to any of the claims 1 to 10, the method comprising the steps of:

comparing the estimated heat transfer $\dot{Q}_{in,est}$ to an upper threshold; and
if the estimated heat transfer $\dot{Q}_{in,est}$ is larger than the upper threshold:
operating an electric switch to curtail power to a system for heating and/or ventilation and/or air-conditioning (1).

12. The method according to claim 11, wherein the electric switch connects the system for heating and/or ventilation and/or air-conditioning (1) to a power grid, the method comprising the step of:
if the estimated heat transfer $\dot{Q}_{in,est}$ is larger than the upper threshold:
disconnecting the system for heating and/or ventilation and/or air-conditioning (1) from the power grid by operating the electric switch.

13. A device comprising a first interface for acquiring a signal indicative of a setpoint temperature, a second interface for acquiring a signal indicative of an inside temperature at a site (2), a third interface for acquiring one or more signals indicative of positions of valves of one or more thermal energy exchangers (4 - 8), a memory and a processor in operative communication with the memory, with the first interface, with the second interface, and with the third interface, the processor being configured to:

read a calibrated model (11; 26) from the memory; and
perform any of the methods according to any of the claims 1 to 12.

14. A computer program comprising a set of instructions that when executed by one or more processors comprised in the device cause the device according to claim 13 to perform any of the methods according to any of the claims 1 to 12.

15. A computer-readable medium having stored thereon the computer program of claim 14.

**Patentansprüche**

1. Verfahren zum Schätzen einer Wärmeübertragung $\dot{Q}_{in,est}$ über einen oder mehrere Wärmetauscher (4 - 8), das folgende Schritte umfasst:

Erfassen eines Signals, das eine Solltemperatur angibt,
Erfassen eines Signals, das eine Innentemperatur an einem Standort (2) angibt,
Erfassen von einem oder mehreren Signalen, die Positionen von Ventilen des einen oder der mehreren Wärmetauscher (4 - 8) angeben,
Erzeugen eines Wertes der Solltemperatur aus dem Signal, das die Solltemperatur angibt,
Erzeugen eines Wertes der Innentemperatur $T_{site}$ an dem Standort (2) aus dem Signal, das die Innentemperatur angibt,

Erzeugen eines Wertes der Position aus dem einen oder den mehreren Signalen, die Positionen der Ventile angeben,

Bereitstellen des Werts der Solltemperatur und des Werts der Innentemperatur $T_{site}$ am Standort (2) und des Werts der Position an ein kalibriertes Modell (11; 26) und

Benutzen des kalibrierten Modells (11; 26) zum Schätzen der Wärmeübertragung $\dot{Q}_{in,est}$ über den einen oder die mehreren Wärmetauscher (4 - 8).

2. Das Verfahren nach Anspruch 1, das folgende Schritte umfasst:

Benutzen des kalibrierten Modells (11; 26) zum Normalisieren des Werts der Solltemperatur,

Benutzen des kalibrierten Modells (11; 26) zum Normalisieren des Werts der Innentemperatur $T_{site}$ am Standort (2),

Benutzen des kalibrierten Modells (11; 26) zum Normalisieren des Werts der Position und

Benutzen des kalibrierten Modells (11; 26) zum Schätzen der Wärmeübertragung $\dot{Q}_{in,est}$ über den einen oder die mehreren Wärmetauscher (4 - 8) auf der Grundlage des normalisierten Werts der Solltemperatur und des normalisierten Werts der Innentemperatur am Standort (2) und des normalisierten Werts der Position.

3. Das Verfahren nach einem der Ansprüche 1 bis 2, das folgende Schritte umfasst:

Erzeugen eines oder mehrerer einzelner Werte durch Erzeugen eines einzelnen Wertes aus jedem Signal, das eine Position eines Ventils angibt, und

Erzeugen des Wertes der Position durch Bestimmen eines Mittelwerts für den einen oder die mehreren einzelnen Werte.

4. Das Verfahren nach Anspruch 2 oder Anspruch 2 und 3, das folgenden Schritt umfasst:
Benutzen des kalibrierten Modells (11) zum Schätzen der Wärmeübertragung $\dot{Q}_{in,est}$ über den einen oder die mehreren Wärmetauscher (4 - 8) ausschließlich in Abhängigkeit von dem normalisierten Wert der Solltemperatur und dem normalisierten Wert der Innentemperatur am Standort (2) und dem normalisierten Wert der Position.

5. Das Verfahren nach einem der Ansprüche 1 bis 3, das folgende Schritte umfasst:

Erfassen eines Signals, das eine Außentemperatur am Standort (2) angibt,

Erzeugen eines Wertes für die Außentemperatur $T_{out}$ aus dem Signal, das die Außentemperatur angibt,

Bereitstellen des Werts der Solltemperatur und des Werts der Innentemperatur $T_{site}$ am Standort (2) und des Werts der Position und des Werts für die Außentemperatur $T_{out}$ für das kalibrierte Modell (26) und

Benutzen des kalibrierten Modells (26) zum Schätzen der Wärmeübertragung $\dot{Q}_{in,est}$ über den einen oder die mehreren Wärmetauscher (4 - 8) auf der Grundlage des Werts der Solltemperatur und des Werts der Innentemperatur $T_{site}$ am Standort (2) und des Werts der Position und des Werts für die Außentemperatur $T_{out}$.

6. Das Verfahren nach Anspruch 5, das folgenden Schritt umfasst:
Erfassen des Signals, das die Außentemperatur am Standort (2) angibt, durch Auslesen des Signals, das die Außentemperatur angibt, aus einem Sensor am Standort (2).

7. Das Verfahren nach Anspruch 5, das folgenden Schritt umfasst:
Erfassen des Signals, das die Außentemperatur am Standort (2) angibt, durch Verbinden mit einem Computernetzwerk und Empfangen eines Datenpakets, welches das Signal umfasst, das die Außentemperatur angibt, aus dem Netzwerk und Extrahieren des Signals, das die Außentemperatur angibt, aus dem Datenpaket.

8. Das Verfahren nach einem der Ansprüche 5 bis 6, das folgende Schritte umfasst:

Benutzen des kalibrierten Modells (26) zum Normalisieren des Werts der Solltemperatur,

Benutzen des kalibrierten Modells (26) zum Normalisieren des Werts der Innentemperatur $T_{site}$ am Standort (2),

Benutzen des kalibrierten Modells (26) zum Normalisieren des Werts der Position,

Benutzen des kalibrierten Modells (26) zum Normalisieren des Werts für die Außentemperatur $T_{out}$ und

Benutzen des kalibrierten Modells (26) zum Schätzen der Wärmeübertragung $\dot{Q}_{in,est}$ über den einen oder die mehreren Wärmetauscher (4 - 8) auf der Grundlage des normalisierten Werts der Solltemperatur und des normalisierten Werts der Innentemperatur am Standort (2) und des normalisierten Werts der Position und des normalisierten Werts für die Außentemperatur.

9. Das Verfahren nach einem der Ansprüche 5 bis 7, das folgenden Schritt umfasst:
Benutzen des kalibrierten Modells (26) zum Schätzen der Wärmeübertragung $\dot{Q}_{in,est}$ über den einen oder die mehreren Wärmetauscher (4 - 8) ausschließlich in Abhängigkeit von dem Wert der Solltemperatur und dem Wert der Innentemperatur $T_{site}$ am Standort (2) und dem Wert der Position und dem Wert für die Außentemperatur $T_{out}$.

10. Das Verfahren nach Anspruch 8, das folgenden Schritt umfasst:
Benutzen des kalibrierten Modells (26) zum Schätzen der Wärmeübertragung $\dot{Q}_{in,est}$ über den einen oder die mehreren Wärmetauscher (4 - 8) ausschließlich in Abhängigkeit von dem normalisierten Wert der Solltemperatur und dem normalisierten Wert der Innentemperatur am Standort (2) und dem normalisierten Wert der Position und dem normalisierten Wert für die Außentemperatur.

11. Das Verfahren nach einem der Ansprüche 1 bis 10, das folgende Schritte umfasst:

Vergleichen der geschätzten Wärmeübertragung $\dot{Q}_{in,est}$ mit einem oberen Schwellenwert und,
wenn die geschätzte Wärmeübertragung $\dot{Q}_{in,est}$ über dem oberen Schwellenwert liegt:
Betätigen eines elektrischen Schalters zwecks Drosselns der Stromzufuhr für ein System zum Heizen und/oder Lüften und/oder Klimatisieren (1).

12. Das Verfahren nach Anspruch 11, wobei der elektrische Schalter das System zum Heizen und/oder Lüften und/oder Klimatisieren (1) mit einem Stromnetz verbindet, wobei das Verfahren folgenden Schritt umfasst:
wenn die geschätzte Wärmeübertragung $\dot{Q}_{in,est}$ über dem oberen Schwellenwert liegt:
Trennen des Systems zum Heizen und/oder Lüften und/oder Klimatisieren (1) vom Stromnetz durch Betätigen des elektrischen Schalters.

13. Vorrichtung, die Folgendes umfasst: eine erste Schnittstelle zum Erfassen eines Signals, das eine Solltemperatur angibt, eine zweite Schnittstelle zum Erfassen eines Signals, das eine Innentemperatur an einem Standort (2) angibt, eine dritte Schnittstelle zum Erfassen eines oder mehrerer Signale, die Positionen von Ventilen des einen oder der mehreren Wärmetauscher (4 - 8) angeben, einen Speicher und einen mit dem Speicher, der ersten, der zweiten und der dritten Schnittstelle wirkverbundenen Prozessor, der so konfiguriert ist, dass er:

ein kalibriertes Modell (11; 26) aus dem Speicher ausliest und
eines der Verfahren nach einem der Ansprüche 1 bis 12 durchführt.

14. Computerprogramm, das eine Reihe Anweisungen umfasst, die, wenn sie von einem oder mehreren Prozessoren in der Vorrichtung ausgeführt werden, die Vorrichtung nach Anspruch 13 dazu veranlassen, eines der Verfahren nach einem der Ansprüche 1 bis 12 durchzuführen.

15. Computerlesbares Medium, auf dem das Computerprogramm nach Anspruch 14 gespeichert ist.

**Revendications**

1. Procédé d'estimation d'un transfert thermique $\dot{Q}_{in,est}$ via un ou plusieurs échangeurs d'énergie thermique (4 - 8), le procédé comprenant les étapes de :

acquisition d'un signal indiquant une température de consigne ;
acquisition d'un signal indiquant une température intérieure au niveau d'un site (2) ;
acquisition d'un ou plusieurs signaux indiquant les positions des vannes du ou des plusieurs échangeurs d'énergie thermique (4 - 8) ;
production d'une valeur de température de consigne à partir du signal indiquant la température de consigne ;
production d'une valeur de température intérieure $T_{site}$ au niveau du site (2) à partir du signal indiquant la température intérieure ;
production d'une valeur de position à partir du ou des plusieurs signaux indiquant les positions des vannes ;
fourniture à un modèle étalonné (11 ; 26) de la valeur de température de consigne et de la valeur de température intérieure $T_{site}$ au niveau du site (2) et de la valeur de position ; et
utilisation du modèle étalonné (11 ; 26) pour estimer le transfert de chaleur $\dot{Q}_{in,est}$ via le ou les plusieurs échangeurs d'énergie thermique (4 - 8).

**2.** Le procédé selon la revendication 1, le procédé comprenant les étapes de :

utilisation du modèle étalonné (11 ; 26) pour normaliser la valeur de température de consigne ;
utilisation du modèle étalonné (11 ; 26) pour normaliser la valeur de température intérieure $T_{site}$ au niveau du site (2) ;
utilisation du modèle étalonné (11 ; 26) pour normaliser la valeur de position ; et
utilisation du modèle étalonné (11 ; 26) pour estimer le transfert de chaleur $\dot{Q}_{in,est}$ via le ou les plusieurs échangeurs d'énergie thermique (4 - 8) sur la base de la valeur normalisée de température de consigne et sur la base de la valeur normalisée de température intérieure au niveau du site (2) et sur la base de la valeur normalisée de position.

**3.** Le procédé selon l'une des revendications 1 et 2, le procédé comprenant les étapes de :

production d'une ou plusieurs valeurs individuelles en produisant une valeur individuelle à partir de chaque signal indiquant une position d'une vanne ; et
production de la valeur de position en déterminant une moyenne de la ou des plusieurs valeurs individuelles.

**4.** Le procédé selon la revendication 2 ou selon les revendications 2 et 3, le procédé comprenant l'étape de :
utilisation du modèle étalonné (11) pour estimer le transfert de chaleur $\dot{Q}_{in,est}$ via le ou les plusieurs échangeurs d'énergie thermique (4 - 8) exclusivement en fonction de la valeur normalisée de température de consigne et de la valeur normalisée de température intérieure au niveau du site (2) et de la valeur normalisée de position.

**5.** Le procédé selon l'une des revendications 1 à 3, le procédé comprenant les étapes de :

acquisition d'un signal indiquant une température extérieure à l'extérieur du site (2) ;
production d'une valeur de température extérieure $T_{out}$ à partir du signal indiquant la température extérieure ;
fourniture au modèle étalonné (26) de la valeur de température de consigne et de la valeur de température intérieure $T_{site}$ au niveau du site (2) et de la valeur de position et de la valeur de température extérieure $T_{out}$ ; et
utilisation du modèle étalonné (26) pour estimer le transfert de chaleur $\dot{Q}_{in,est}$ via le ou les plusieurs échangeurs d'énergie thermique (4 - 8) sur la base de la valeur de température de consigne et sur la base de la valeur de température intérieure $T_{site}$ au niveau du site (2) et sur la base de la valeur de position et sur la base de la valeur de température extérieure $T_{out}$.

**6.** Le procédé selon la revendication 5, le procédé comprenant l'étape de :
acquisition du signal indiquant la température extérieure à l'extérieur du site (2) par lecture du signal indiquant la température extérieure à partir d'un capteur à l'extérieur du site (2).

**7.** Le procédé selon la revendication 5, le procédé comprenant l'étape de :
acquisition du signal indiquant la température extérieure à l'extérieur du site (2) en se connectant à un réseau informatique et en recevant du réseau un paquet de données comprenant le signal indiquant la température extérieure et en extrayant le signal indiquant la température extérieure à partir du paquet de données.

**8.** Le procédé selon l'une des revendications 5 et 6, le procédé comprenant les étapes de :

utilisation du modèle étalonné (26) pour normaliser la valeur de température de consigne ;
utilisation du modèle étalonné (26) pour normaliser la valeur de température intérieure $T_{site}$ au niveau du site (2) ;
utilisation du modèle étalonné (26) pour normaliser la valeur de position ;
utilisation du modèle étalonné (26) pour normaliser la valeur de température extérieure $T_{out}$ ; et
utilisation du modèle étalonné (26) pour estimer le transfert de chaleur $\dot{Q}_{in,est}$ via le ou les plusieurs échangeurs d'énergie thermique (4 - 8) sur la base de la valeur normalisée de température de consigne et sur la base de la valeur normalisée de température intérieure au niveau du site (2) et sur la base de la valeur normalisée de position et sur la base de la valeur normalisée de température extérieure.

**9.** Le procédé selon l'une des revendications 5 à 7, le procédé comprenant l'étape de :
utilisation du modèle étalonné (26) pour estimer le transfert thermique $\dot{Q}_{in,est}$ via le ou les plusieurs échangeurs d'énergie thermique (4 - 8) exclusivement en fonction de la valeur de température de consigne et de la valeur de température intérieure $T_{site}$ au niveau du site (2) et de la valeur de position et de la valeur de température extérieure $T_{out}$.

**10.** Le procédé selon la revendication 8, le procédé comprenant l'étape de :
utilisation du modèle étalonné (26) pour estimer le transfert thermique $\dot{Q}_{in,est}$ via le ou les plusieurs échangeurs d'énergie thermique (4 - 8) exclusivement en fonction de la valeur normalisée de température de consigne et de la valeur normalisée de température intérieure au niveau du site (2) et de la valeur normalisée de position et de la valeur normalisée de température extérieure.

**11.** Le procédé selon l'une des revendications 1 à 10, le procédé comprenant les étapes de :

comparaison du transfert de chaleur $\dot{Q}_{in,est}$ estimé à un seuil supérieur ; et
si le transfert de chaleur $\dot{Q}_{in,est}$ estimé est supérieur au seuil supérieur :
actionnement d'un commutateur électrique pour réduire l'alimentation électrique d'un système de chauffage et/ou de ventilation et/ou de climatisation (1).

**12.** Le procédé selon la revendication 11, dans lequel le commutateur électrique connecte le système de chauffage et/ou de ventilation et/ou de climatisation (1) à un réseau électrique, le procédé comprenant l'étape de :
si le transfert de chaleur $\dot{Q}_{in,est}$ estimé est supérieur au seuil supérieur :
déconnexion du système de chauffage et/ou de ventilation et/ou de climatisation (1) du réseau électrique en actionnant le commutateur électrique.

**13.** Dispositif comprenant une première interface pour acquérir un signal indiquant une température de consigne, une deuxième interface pour acquérir un signal indiquant une température intérieure au niveau d'un site (2), une troisième interface pour acquérir un ou plusieurs signaux indiquant les positions des vannes d'un ou plusieurs échangeurs d'énergie thermique (4 - 8), une mémoire et un processeur en communication fonctionnelle avec la mémoire, avec la première interface, avec la deuxième interface, et avec la troisième interface, le processeur étant configuré pour :

lire un modèle étalonné (11 ; 26) à partir de la mémoire ; et
mettre en œuvre l'un des procédés selon l'une des revendications 1 à 12.

**14.** Programme informatique comprenant un ensemble d'instructions qui, lorsqu'elles sont exécutées par un ou plusieurs processeurs compris dans le dispositif, amènent le dispositif selon la revendication 13 à mettre en œuvre l'un des procédés selon l'une des revendications 1 à 12.

**15.** Support lisible par ordinateur sur lequel est stocké le programme informatique selon la revendication 14.

FIG 1

FIG 2

FIG 3

FIG 4

**EP 4 227 754 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015061271 A1

- US 2021285671 A1